# EUROPEAN PATENT APPLICATION

(11) **EP 3 395 568 A1**
(43) Date of publication of application: **31.10.2018**
(21) Application number: 16878494.0
(22) Date of filing: 14.12.2016
(51) Int. Cl.: B32B 27/32, B29C 45/14, B32B 5/00

(54) **COMPOSITE MOLDED ARTICLE AND METHOD FOR MANUFACTURING SAME**

(30) Priority: 25.12.2015 JP 2015253269
(71) Applicant: Toray Industries, Inc., Tokyo 103-8666 (JP)
(72) Inventor: HIDAKA, Shinsuke, Nagoya-shi Aichi 455-8502 (JP); HATTORI, Kimihiko, Nagoya-shi Aichi 455-8502 (JP); MATSUOKA, Hideo, Nagoya-shi Aichi 455-8502 (JP)
(74) Representative: Hoefer & Partner Patentanwälte mbB
(86) International application number: PCT/JP2016/087150
(87) International publication number: WO 2017/110603

(57) **Abstract**

A composite molded article in which a fiber-reinforced resin molded article (A) comprising a fiber-reinforced resin in which a polyamide-based resin is used as a matrix resin, a molded article (B) comprising an acid-modified-olefin-based copolymer, a molded article (C) comprising an unmodified-olefin-based polymer not containing an acid, and a molded article (D) comprising a polypropylene-based polymer are layered in this order, and a method for manufacturing the same. The layer (B) comprising an acid-modified-olefin-based copolymer and the layer (C) comprising an unmodified-olefin-based polymer not containing an acid are interposed as joining layers between the layer (A) of the fiber-reinforced resin in which a polyamide-based resin is used as a matrix resin and the layer (D) comprising a polypropylene-based polymer, whereby a composite molded article can be obtained in which the layers (A), (B), (C) and (D) are strongly joined and integrated, and a composite molded article having excellent characteristics not realizable by the layer (A) or layer (D) alone can be obtained.

## Description

### Technical Field of the Invention

The present invention relates to a composite molded article in which a fiber-reinforced resin molded article and a molded article comprising a specific resin different from the matrix resin, in particular, a polypropylene (hereinafter, sometimes abbreviated as PP) based resin, are joined and integrated via a specific joining layer, and a method for manufacturing the same.

### Background Art of the Invention

Although a fiber-reinforced resin is broadly used in various fields because it has high mechanical properties while it is light in weight, there are many cases where, by employing a structure of a fiber-reinforced resin molded article laminated with a layer of a specific resin different from a matrix resin of the fiber-reinforced resin molded article, as compared with a case of a single layer of the fiber-reinforced resin layer or the specific resin layer, it is possible to satisfy various required performances and to improve moldability and surface properties while securing desired mechanical properties.

For example, it is known that a PP-based resin can exhibit excellent moldability, surface properties and the like, but frequently it is difficult to directly join a fiber-reinforced resin layer and a PP-based resin layer, and for example, in Patent document 1, a lamination structure of a PP/GF (glass fibers) prepreg is disclosed. In this Patent document 1, however, because no joining layer is interposed between both layers, in case of a combination of resins which do not have properties suitable for joining between the resins of both layers to be integrated as described above, it is difficult to directly join and integrate both layers.

Further, in Patent document 2, a lamination structure of PP foam/PVC (vinyl chloride). In this Patent document 2, however, a polyamide-based fiber-reinforced resin layer or a PP resin layer, which is targeted in the present invention, is not mentioned.

Furthermore, in Patent document 3, a method for previously fixing a thermoplastic resin sheet containing reinforcing fibers in a mold and injecting a thermoplastic resin into the mold to integrate them. Although there is a description that a joining layer, which concretely comprises a polypropylene or modified resins thereof, is interposed between both layers, since the integration is carried out by injecting a thermoplastic resin to the joining layer, it is different from a combination according to the present invention. Further, there is no description with respect to the thickness of the joining layer, and there is a case where both the initial properties and the properties after the evaluation of long-term durability are not exhibited.

### Prior art documents

### Patent documents

Patent document 1: JP-A- HEI 09-272134
Patent document 2: JP-A-HEI 11-034064
Patent document 3: WO2014 / 112501

### Summary of the Invention

### Problems to be solved by the Invention

Accordingly, when aiming to obtain a composite molded article having a fiber-reinforced resin molded article in which a polyamide-based resin is used as a matrix resin and a molded article comprising a specific resin different from the matrix resin, in particular, a PP-based resin, an object of the present invention is to provide a composite molded article joined and integrated with a high joining strength via a specific joining layer capable of exhibiting an excellent joining ability to both the fiber-reinforced resin molded article and the PP-based resin molded article, and a method for manufacturing the same .

### Means for solving the Problems

To achieve the above-described object, the present invention provides a composite molded article layered the following (A), (B), (C) and (D) in this order:
(A) a fiber-reinforced resin molded article comprising a fiber-reinforced resin in which a polyamide-based resin is used as a matrix resin,
(B) a molded article comprising an acid-modified-olefin-based copolymer,
(C) a molded article comprising an unmodified-olefin-based polymer not containing an acid, and
(D) a molded article comprising a polypropylene-based polymer.

In such a composite molded article according to the present invention, the acid-modified-olefin-based copolymer in the molded article comprising an acid-modified-olefin-based copolymer (B) has a high joining suitability with the polyamide-based resin in the fiber-reinforced resin molded article comprising a fiber-reinforced resin in which the polyamide-based resin is used as a matrix resin (A), and the unmodified-olefin-based polymer in the molded article comprising the unmodified-olefin-based polymer not containing an acid (C) has a high joining suitability with the polypropylene-based polymer in the molded article comprising the polypropylene-based polymer (D), respectively, and because the acid-modified-olefin-based copolymer in the molded article comprising an acid-modified-olefin-based copolymer (B) and the unmodified-olefin-based polymer in the molded article comprising the unmodified-olefin-based polymer not containing an acid (C) are both olefin-based polymers, they have a high joining suitability with no problem, and therefore, these molded articles layered in the order of (A), (B), (C) and (D) are joined and integrated with a high joining strength over the entire surface, so that not only the initial properties, but also the strength and stiffness after long-term durability evaluation are excellent, and the intended object can be achieved securely.

In the above-described composite molded article according to the present invention, it is preferred that the polyamide-based resin in the fiber-reinforced resin molded article (A) is nylon 6, and the polypropylene-based polymer (D) is polypropylene. As the reason being preferred, it is raised that the adhesion with the molded article comprising an acid-modified-olefin-based copolymer (B) and the molded article comprising an unmodified-olefin-based polymer not containing an acid (C) is good, a flexural strength and a flexural modulus in a flexural evaluation are greatly improved, and further, no extreme decrease in flexural strength and flexural modulus is observed even in a flexural evaluation after a test for a heat aging resistance or a hot water resistance, and there is no problem.

In the above-described composite molded article according to the present invention, it is preferred that the fiber-reinforced resin molded article (A) contains reinforcing fibers having a number average fiber length of 2 mm or more. By containing such reinforcing fibers, because the fiber-reinforced resin molded article (A) ca exhibit a high mechanical strength, it becomes possible to exhibit a high mechanical strength even as a whole of the composite molded article.

In particular, if the reinforcing fibers of the fiber-reinforced resin molded article (A) are continuous fibers, it becomes possible to exhibit a particularly high mechanical strength.

Further, if the reinforcing fibers of the fiber-reinforced resin molded article (A) are continuous fibers and oriented in one direction, a composite molded article can exhibit a high mechanical strength, particularly in a specific direction in which continuous reinforcing fibers are oriented.

Further, in the composite molded article according to the present invention, although the reinforcing fibers of the fiber-reinforced resin molded article (A) are not particularly limited and it is possible to use carbon fibers, glass fibers, aramid fibers, or other reinforcing fibers, in particular, in case where it is aimed to exhibit a high mechanical strength, it is preferred to contain carbon fibers.

Further, in the composite molded article according to the present invention, it is preferred that the acid-modified-olefin-based copolymer (B) comprises a copolymer obtained by copolymerization of 0.1 to 30% by weight of an unsaturated carboxylic acid or an α, β-unsaturated carboxylic acid anhydride and 70 to 99.9% by weight of a propylene-based monomer. By such composition, the acid-modified-olefin-based copolymer (B) can easily and adequately exhibit a high joining suitability to the polyamide-based resin in the fiber-reinforced resin molded article (A), and the long-term durability is also excellent, and besides, it can exhibit a high joining suitability also to the unmodified olefin-based polymer in the molded article comprising the unmodified-olefin-based polymer not containing an acid (C), and via the molded article comprising the unmodified-olefin-based polymer not containing an acid (C), can also contribute to easily and adequately exhibit a high joining suitability to the molded article comprising a polypropylene-based polymer (D). In the acid-modified-olefin-based copolymer (B), the content of the unsaturated carboxylic acid or the α, β-unsaturated carboxylic acid anhydride is more preferably 0.5% by weight or more, and more preferably 10% by weight or less.

Further, in the composite molded article according to the present invention, it is preferred that the molded article comprising an unmodified olefin-based copolymer (C) is a random or block copolymer of propylene and ethylene or an α-olefin having a carbon number of 4 to 20. As the reason being preferred, it is raised that the adhesion with the acid-modified-olefin-based copolymer (B) and the molded article comprising a polypropylene-based polymer (D) is good, a flexural strength and a flexural modulus in a flexural evaluation are greatly improved, and further, no extreme decrease in flexural strength and flexural modulus is observed even in a flexural evaluation after a test for a heat aging resistance or a hot water resistance, and there is no problem.

Further, in the composite molded article according to the present invention, it is preferred that the polypropylene-based polymer (D) contains a reinforcing material such as a fibrous filler and a non-fibrous filler. In this way, both outer surfaces of the composite molded article are formed by the fiber-reinforced resin molded article (A) reinforced by reinforcing fibers and the molded article comprising a polypropylene-based polymer (D) reinforced by the reinforcing material, and as a result, the composite molded article as a whole has high mechanical properties and long-term durability.

Further, in the composite molded article according to the present invention, since the molded articles comprising an acid-modified-olefin-based copolymer (B) and comprising an unmodified-olefin-based polymer not containing an acid (C) which are interposed may be ones capable of fulfilling a role of strong joining between the fiber-reinforced resin molded article (A) and the molded article comprising a polypropylene-based polymer (D), and the molded articles comprising an acid-modified-olefin-based copolymer (B) and comprising an unmodified-olefin-based polymer not containing an acid (C) themselves are not ones to which are expected with other properties such as mechanical properties and surface properties, they may have a small thickness enough capable of contributing to the joining. From this viewpoint, the thickness of each of the molded articles comprising an acid-modified-olefin-based copolymer (B) and comprising an unmodified-olefin-based polymer not containing an acid (C) is preferably, for example, in a range of 10 to 50 µm.

A method for manufacturing a composite molded article according to the present invention comprises the steps of: placing molded articles comprising a fiber-reinforced resin (A), an acid-modified-olefin-based copolymer (B), and an unmodified-olefin-based copolymer not containing an acid (C), respectively, in a mold; and supplying a liquefied polypropylene-based polymer around the molded articles in the mold to insert-mold the molded articles.

In this method, as a method of supplying the polypropylene-based polymer (D), for example, a method in which the liquefied polypropylene-based polymer (D) is supplied into the mold by injection molding or injection compression molding can be employed.

In the method for manufacturing a composite molded article according to the present invention, it is preferred that the fiber-reinforced resin molded article (A) is molded by introducing continuous fibers into an impregnation die filled with a molten polyamide-based resin and pulling them out of a slit die.

Further, in the method for manufacturing a composite molded article according to the present invention, it is preferred that the fiber-reinforced resin molded article (A), the acid-modified-olefin-based copolymer (B) and the unmodified-olefin-based copolymer (C) are molded and integrated by any one of (a) a method for laminating a thin film, made by melting and integrating the acid-modified-olefin-based copolymer (B) and the unmodified-olefin-based copolymer (C), on at least one surface of the fiber-reinforced resin molded article (A) so that the acid-modified-olefin-based copolymer (B) comes into contact with the fiber-reinforced resin molded article (A), and melting it by heat pressing, and (b) a method for applying a molten acid-modified-olefin-based copolymer (B) onto at least one surface of the fiber-reinforced resin molded article (A), succeedingly applying the unmodified-olefin-based copolymer (C), and cooling them.

### Effect according to the Invention

Thus, according to the composite molded article and the method for manufacturing the same according to the present invention, by interposing the layer (B) comprising an acid-modified-olefin-based copolymer and the layer (C) comprising an unmodified-olefin-based polymer not containing an acid as joining layers between the layer (A) of the fiber-reinforced resin in which a polyamide-based resin is used as a matrix resin and the layer (D) comprising a polypropylene-based polymer, a composite molded article can be obtained in which the layers (A), (B), (C) and (D) are strongly joined and integrated, and a composite molded article having excellent characteristics not realizable by the layer (A) or layer (D) alone can be obtained. In particular, by having the fiber-reinforced resin layer (A), it is possible to exhibit high mechanical properties while exerting other required characteristics as a whole of the composite molded article.

### Embodiments for carrying out the Invention

Hereinafter, the present invention will be explained in more detail together with embodiments thereof.

In the composite molded article according to the present invention, (A) a fiber-reinforced resin molded article comprising a fiber-reinforced resin in which a polyamide-based resin is used as a matrix resin, (B) a molded article comprising an acid-modified-olefin-based copolymer, (C) a molded article comprising an unmodified-olefin-based polymer not containing an acid, and (D) a molded article comprising a polypropylene-based polymer, are layered in this order. These components will be explained in detail below.

### (A) Fiber-reinforced resin molded article:

As the thermoplastic resin used in the fiber-reinforced resin molded article, a polyamide resin is used, and it is a polymer having amide bond, whose main raw materials are an aminocarboxylic acid, a lactam or a diamine and a dicarboxylic acid (including a pair of salts thereof), in a main chain. As concrete examples of the raw materials, 6-aminocaproic acid, 11-aminoundecanoic acid, 12-aminododecanoic acid and the like are exemplified as the aminocarboxylic acid. Further, as the lactams, ε-caprolactam, co-undecanolactam, co-laurolactam and the like are exemplified. As the diamine, tetramethylene diamine, hexamethylene diamine, undecamethylene diamine, dodecamethylene diamine and the like are exemplified. Furthermore, as the dicarboxylic acids, adipic acid, suberic acid, sebacic acid, dodecanedioic acid and the like are exemplified. These diamines and dicarboxylic acids can also be used as a pair of salts.

As preferable examples of the polyamide-based resin, polycaproamide (nylon 6), polytetramethylene adipamide (nylon 46), polyhexamethylene adipamide (nylon 66), polycaproamide/polyhexamethylene adipamide copolymer (nylon 6/66), polyundecamide (nylon 11), polycaproamide/ polyundecamide copolymer (nylon 6/11), polydodecamide (nylon 12), polycaproamide/polydodecamide copolymer (nylon 6/12), polyhexamethylene sebacamide (nylon 610), polyhexamethylene dodecamide (nylon 612), polyundecamethylene adipamide (nylon 116), and mixtures or copolymers thereof and the like are exemplified. Among them, nylon 6 is particularly preferable. Further, the polyamide-based resin may be used alone or in combination of two or more.

Next, as reinforcing fibers used in the fiber-reinforced resin molded article, inorganic fibers such as carbon fibers and glass fibers, synthetic resin fibers such as polyamide-based fibers, polyester-based fibers and aramid fibers, and metal fibers such as titanium fibers, boron fibers and stainless steel fibers are exemplified, but it is not necessarily limited thereto. The reinforcing fibers are preferably carbon fibers. By using carbon fibers, a composite molded article excellent in mechanical properties can be obtained.

Although not particularly restricted, in one embodiment of the present invention, a skin material comprises a fiber-reinforced thermoplastic resin, it constitutes a surface layer of the structure in the finally molded form and plays a role in the strength of the structure together with a core material, and because it dominates the rigidity of the structure as a part of the surface layer, it is preferred to have a high stiffness (flexural stiffness or the like) with respect to a desired direction. For that purpose, it is preferred that the reinforcing fibers of the skin material comprise continuous fibers.

Further, as the skin material, a skin material in which reinforcing fibers are aligned in one direction and impregnated with a thermoplastic resin can be used. By using such a skin material, even if it is a relatively large-sized and large-area composite molded article, the skin material can be easily arranged at a predetermined position. Further, in this case, as the skin material, it is also possible to employ a form of a plate-like skin material laminated or knitted with a tape-like base material in which reinforcing fibers are aligned in one direction and impregnated with a thermoplastic resin. By employing such a form, even in a relatively large-sized and large-area structure, it is possible to easily arrange the skin material at a predetermined position as well as to easily impart desired mechanical properties to the skin material.

In addition, as a skin material, it is possible to employ a form containing a reinforcing fiber woven fabric. By employing such a form, it is also possible to impart a desirable design property to the surface of the composite molded article. Further, by containing the reinforcing fiber woven fabric, because it becomes also possible to further improve the mechanical properties of the skin material itself constituting the surface layer of the composite molded article, it is possible to improve the mechanical properties as a whole of the structure.

The method for producing the skin material comprising a thermoplastic resin reinforced by continuous fibers aligned in one direction, used in the present invention, is not particularly restricted, and for example, a pultrusion method for putting continuous fibers in an impregnation die filled with a molten resin and pulling the fibers out of a slit die, a powder impregnation method for sprinkling a thermoplastic resin powder onto a continuous fiber bundle and melt-pressing it, a method for arranging fibers mixed spun with continuous reinforcing fibers and thermoplastic fibers in a plate form and hot pressing it, a method for pressing resin films to upper and lower sides of continuous fibers aligned in one direction and impregnating the resin, and the like, can be exemplified. Among these manufacturing methods, the pultrusion method for putting continuous fibers in an impregnation die filled with a molten resin and pulling the fibers out of a slit die is preferred because the impregnation property of the molten resin into the continuous fibers is good, and the strength, the stiffness, further, the properties after tests of heat aging resistance and hot water resistance of a composite molded article become high.

### (B) Acid-modified-olefin-based copolymer:

PP (polypropylene) used in the present invention is preferably isotactic polypropylene. Isotactic polypropylene is a polypropylene having an isotactic pentad fraction measured by 13C-NMR method of not less than 90%, preferably not less than 95%, As described in, for example, JP-A-2007-186664, the isotactic pentad fraction (mmmm fraction) indicates a rate of existence of an isotactic chain as a pentad unit in a molecular chain measured using 13C-NMR, and a fraction of propylene monomer units present at the center of the chain which are formed by five consecutive propylene monomer units meso-bonded.

Then, the acid-modified-olefin-based copolymer used in the present invention is preferably a copolymer, for example, obtained by copolymerizing 0.1 to 30% by weight of an unsaturated carboxylic acid or an α, β-unsaturated carboxylic acid anhydride, and 70 to 99.9% by weight of a polypropylene-based monomer. By such composition, the acid-modified-olefin-based copolymer (B) can easily and adequately exhibit a high joining suitability to the polyamide-based resin in the fiber-reinforced resin molded article (A), and can also be excellent in long-term durability, and can exhibit a high joining suitability also to the unmodified-olefin-based polymer in the molded article comprising an unmodified-olefin-based polymer not containing an acid (C), and it also becomes possible to easily and adequately contribute to exhibit a high joining suitability to the molded article comprising a polypropylene-based polymer (D) via the molded article comprising an unmodified-olefin-based polymer not containing an acid (C). In the acid-modified-olefin-based copolymer (B), the content of the unsaturated carboxylic acid or the α, β-unsaturated carboxylic acid anhydride is more preferably 0.5% by weight or more, and more preferably 10% by weight or less.

### (C) Unmodified-olefin-based polymer not containing an acid (especially unmodified polypropylene-based polymer):

The unmodified polypropylene-based polymer not containing an acid is a crystalline polypropylene resin, and is a propylene homopolymer or a copolymer of a propylene and an ethylene or an α-olefin having a carbon number of 4 to 20. As the above-describeda-olefin having a carbon number of 4 to 20, 1-butene, 1-pentene, 1-hexene, 4-methyl-1-pentene, 1-octene, 1-decene, 1-dodecene, 1-tetradecene, 1-hexadecene, 1-octadecene, 1-eicosene and the like can be exemplified. Among these, ethylene or an α-olefin having a carbon number of 4 to 20 is preferred. These α-olefins may form random copolymers with propylene or may form block copolymers. The content of the constitutional unit derived from these α-olefins is desirably 5 mol% or less, preferably 2 mol% or less in the polypropylene resin. Such a polypropylene copolymer is excellent in adhesion and joining property to both the acid-modified-olefin-based copolymer (B) and the polypropylene-based polymer (D).

Further, such a polypropylene copolymer has a melt flow rate (ASTM D-1238, 230°C, load of 2.16 kg) of 0.5 to 10 g/10 min, preferably 1 to 8 g/10 min, more preferably It is in the range of 1.5 to 6 g/10 min. Since the melt flow rate is within this range, the sheet or film is excellent in moldability, and both the initial characteristics and long-term characteristics of the laminate are excellent.

Each layer of the composite molded article according to the present invention is manufactured, for example, as follows.

Method for manufacturing a molded article of an acid-modified-olefin-based copolymer (B):
(i) The molten acid-modified-olefin-based copolymer (B) is applied onto the surface when manufacturing the fiber-reinforced resin molded article (A) and it is cooled.
(ii) The acid-modified-olefin-based copolymer (B) alone is formed as a film.

Method for producing a molded article of an unmodified-olefin-based polymer not containing an acid (C) (in particular, an unmodified polypropylene copolymer not containing an acid):
(i) The molten acid-modified-olefin-based copolymer (B) is applied onto the surface when manufacturing the fiber-reinforced resin molded article (A) and then the molten unmodified-olefin-based polymer (C) is applied.
(ii) The unmodified-olefin-based polymer (C) alone is formed as a film.
(iii) The acid-modified-olefin-based copolymer (B) and the unmodified-olefin-based polymer (C) are co-extruded to prepare a laminated film.

Method for manufacturing acid-modified-olefin-based copolymer (B) + unmodified-olefin-based polymer not containing an acid (C):
(i) A molded article of the unmodified-olefin-based polymer not containing an acid (C) is layered on a molded article of the acid-modified-olefin-based copolymer (B), and they are molten and integrated by heat press such as known dry lamination method or extrusion lamination method.
(ii) The acid-modified-olefin-based copolymer (B) and the unmodified-olefin-based polymer not containing an acid (C) are co-extruded, and they are discharged and cooled at an integrated state.

Examples of method for manufacturing fiber-reinforced resin molded article (A) and [a laminate of acid-modified-olefin-based copolymer (B) + unmodified-olefin-based polymer (C)]:
(i) The molded articles of the acid-modified-olefin-based copolymer (B) and the unmodified-olefin-based polymer (C) are layered on the fiber-reinforced resin molded article (A), and they are molten and integrated by heat press.
(ii) The molten acid-modified-olefin-based copolymer (B) is applied onto the surface of the fiber-reinforced resin molded article (A) and then the molten unmodified-olefin-based polymer (C) is applied, and they are cooled.
(iii) The acid-modified-olefin-based copolymer (B) and the unmodified-olefin-based polymer (C) are co-extruded when manufacturing the fiber-reinforced resin molded article (A), and they are discharged and cooled at an integrated state.

Among them, the methods of (i) and (ii) are preferred from the viewpoint in that the adhesion is good, the flexural strength and the flexural modulus in the flexural evaluation are greatly improved, and further, an extreme decrease of the flexural strength and the flexural modulus is not observed even in the flexural evaluation after tests of heat aging resistance and hot water resistance.

Method for manufacturing a laminate of (A), (B), (C) and (D):
(i) An integrated molded article of (A) + (B) + (C) or respective molded articles of independent (A), (B) and (C) are inserted into a mold for injection molding, and a molten (D) is injected to heat-fuse them.
(ii) (D) is injection molded beforehand, and an integrated sheet of (A) + (B) + (C) is heat-fused as post-lamination to integrate them.

For heat welding, various methods such as laser, hot plate, infrared ray, friction stirring, ultrasonic wave, vibration, spin, microwave, and electromagnetic induction can be applied, but it is not limited thereto.

Since the composite molded article according to the present invention is excellent in joining strength, it is useful in use for parts forming moving bodies such as automobiles, aircraft, railroad cars, ships, bicycles, and structural members used for electric and electronic equipment, building materials, sports goods and the like. For example, it can be suitably used in automobile parts such as a hood, a door panel, a roof, a seat, a back door, a door inner, and a radiator core support, in parts of electric and electronic equipment such as a housing, a chassis, and a gear, and the like.

### Examples

Hereinafter, Examples and Comparative Examples will be explained. First, methods of determining properties used in the examples and comparative examples will be explained.

### (1) Flexural evaluation

A strip-shaped test piece of 10 mm x 150 mm x 3.0 mm was cut out, and the strip-shaped test piece was pressed and bent under a span distance of 80 mm at a bending speed of 2 mm/min. Measurement was carried out with n=3, and flexural strength and flexural modulus were determined.

### (2) Heat aging resistance test:

The strip-shaped test piece for the flexural evaluation was placed in a hot air oven (supplied by Tabai Corporation) under an atmosphere of 80°C, after 500 hours, it was taken out and left in an atmosphere of 23°C and 50 %RH for 24 hours, and then, flexural strength and flexural modulus were determined.

### (3) Hot water resistance evaluation:

The strip-shaped test piece for the flexural evaluation was immersed in hot water at 50°C, taken out after 500 hours, and after moisture was removed, it was left in an atmosphere of 23°C and 50 %RH for 24 hours, and then, flexural strength and flexural modulus were determined.

### <Manufacturing method of each molded article>

### (A) Manufacturing method of fiber-reinforced resin molded article (A-1, A-2):

Carbon fibers "Torayca" (registered trademark) T700S (12K) supplied by Toray Industries, Inc. were aligned and placed in an impregnation die filled with nylon 6 resin, and then, a fiber-reinforced resin molded article (A-1) having a content of continuous fibers of 50% by weight and having a width of 50 mm and a thickness of 0.28 mm was obtained by drawing molding.

Further, a fiber-reinforced resin molded article (A-2) with the same fiber content was manufactured by a film method in which a nylon 6 resin film was melt-pressed on a continuous fiber bundle of carbon fibers "Torayca" (registered trademark) T700S (12K) supplied by Toray Industries, Inc.

### (B) Methods for manufacturing molded articles comprising acid-modified-polypropylene-based copolymers (B-1) to (B-3) as acid-modified-olefin-based copolymers:

Copolymers b-1 to b-3 having the compositions shown in Table 1 were prepared. Each of the copolymers b-1 to b-3 was charged into an extruder, the molten resin was cooled and solidified on a cooling drum to form a film having a thickness of 25 µm to prepare each of the molded articles (B-1) to (B-3) .

### (C) Method for manufacturing a molded article comprising an unmodified-polypropylene-based polymer (C-1) as an unmodified-olefin-based polymer not containing an acid:

A polypropylene (PP) resin was charged into an extruder, and the extruded PP resin was cooled and solidified on a cooling drum to form a film having a thickness of 25 µm to prepare a molded article (C-1).

### (D) Method for manufacturing molded articles (core materials) (D-1, D-2) comprising PP resins as polypropylene-based polymers:

A molded article (D-1) was manufactured using L4070P (supplied by Prime Polymer Co., Ltd., GF (glass fiber) reinforced PP resin), and a molded article (D-2) was manufactured using TLP 8148 (supplied by Toray Industries, Inc., CF (carbon fiber) reinforced PP resin).

### <Example 1>

Molded article (B-1) and molded article (C-1) were superimposed on each other, dry lamination was carried out, and a laminated molded article integrated with (B) and (C) was prepared. Further, the above-described laminated molded article integrated with (B-1) and (C-1) was superposed on the fiber-reinforced resin molded article (A-1) and pressed at 240°C in a press molding machine, to prepare a laminated molded article integrated with (A-1), (B-1) and (C-1).

Two of the above-described laminated molded articles were respectively set in the movable and fixed side cavities of the injection molding machine in such a manner that each of the layers (A-1) was in contact with the mold surface, and PP resin (D-1) was injection-molded at a cylinder temperature of 220°C and a mold temperature of 80°C to obtain a laminate as composite molded article having a size of 100 x 150 x 3 mm.

### <Examples 2 and 3>

Each of different-material composite molded articles was obtained in the same manner as in Example 1 other than a condition where the (B) used in Example 1 was changed as shown in Table 2.

### <Examples 4 to 6>

Each of different-material composite molded articles was obtained by injection molding in the same manner as in Examples 1 to 3 other than a condition where the (D) described in Examples 1 to 3 was changed to (D-2).

### <Examples 7 to 9>

Each of composite molded articles was obtained by injection molding in the same manner as in Example 1 other than a condition where the (A-1) used as the fiber-reinforced resin molded article (A) in Examples 1 to 3 was changed to (A-2).

### <Comparative Example 1>

A sheet comprising (A) fiber-reinforced resin molded articles (A-1) and (B-1) was set on the cavity surface of the mold, and (D-1) was injection-molded at a cylinder temperature of 260°C and a mold temperature of 80°C to obtain a different-material composite molded article having a size of 100 x 150 x 3 mm.

### <Comparative Example 2>

A composite molded article was obtained by injection molding in the same manner as in Comparative Example 1 other than a condition where (B-2) was used as the (B) in Comparative Example 1.

### <Comparative Example 3>

A composite molded article was obtained by injection molding in the same manner as in Comparative Example 1 other than a condition where (C) PP resin (C-1) was used instead of the (B) (B-1) in Comparative Example 1.

The molding conditions and the evaluation results of properties of the composite molded articles obtained in Examples 1 to 9 and Comparative Examples 1 to 3 are shown in Tables 2 to 5.

In all of Examples 1 to 9, in case where (B-1 to 3) + (C-1) was interposed as a joining layer, the adhesion was good in any case, and the flexural strength and flexural modulus were greatly improved, and further, it was found that no extreme decrease in flexural strength and flexural modulus was observed even in the flexural evaluation after the tests for heat aging resistance and hot water resistance, and there was no problem.

On the other hand, in Comparative Examples 1 to 3, the adhesion was poor, and in the flexural evaluation of Comparative Examples 1 and 2, although the flexural strength and the flexural modulus were in the same levels as those of the Examples in the initial flexural evaluation, it was found that the bending strength and the flexural modulus after heat aging and hot water aging were remarkably lowered. Further, in Comparative Example 3, the adhesion was very poor, and peeling off occurred immediately after molding, so that it was impossible to evaluate flexural strength and flexural modulus.

**[Table 1]**

| | | b-1 | b-2 | b-3 |
|---|---|---|---|---|
| Amount of acid modification | % by weight | 1 | 5 | 10 |

**[Table 2]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Molded article | (A) fiber-reinforced resin molded article | - | A-1 | A-1 | A-1 | A-1 | A-1 | A-1 | A-2 | A-2 | A-2 |
| | (B) modified PP resin | - | B-1 | B-2 | B-3 | B-1 | B-2 | B-3 | B-1 | B-2 | B-3 |
| | (C) PP resin | . | C-1 | C-1 | C-1 | C-1 | C-1 | C-1 | C-1 | C-1 | C-1 |
| | (D) PP resin (core material) | - | D-1 | D-1 | D-1 | D-2 | D-2 | D-2 | D-1 | D-1 | D-1 |
| Joining conditions | Joining method of (B) and (C) | - | dry lamination | dry lamination | dry lamination | dry lamination | dry lamination | dry lamination | dry lamination | dry lamination | dry lamination |
| | Lamination setting temperature | °C | 110 | 110 | 110 | 110 | 110 | 110 | 110 | 110 | 110 |
| | Joining method of (A) and (B) + (C) | - | press-fusion | press-fusion | press-fusion | press-fusion | press-fusion | press-fusion | press-fusion | press-fusion | press-fusion |
| | Press setting temperature | °C | 240 | 240 | 240 | 240 | 240 | 240 | 240 | 240 | 240 |
| | Joining method of (A) + (B) + (C) and (D) | - | injection | injection | injection | injection | injection | injection | injection | injection | injection |
| | Injection cylinder setting temperature | °C | 220 | 220 | 220 | 220 | 220 | 220 | 220 | 220 | 220 |
| | Mold setting temperature | °C | 80 | 80 | 80 | 100 | 100 | 1 00 | 80 | 80 | 80 |
| | Time | s | 20 | 20 | 20 | 20 | 20 | 20 | 20 | 20 | 20 |
| | Pressure | MPa | 33 | 33 | 33 | 33 | 33 | 33 | 33 | 33 | 33 |

**[Table 3]**

| | | | Comparative Example 1 | Comparative Example 2 | Comparative Example 3 |
|---|---|---|---|---|---|
| Material | (A) fiber-reinforced resin molded article | - | A-1 | A-1 | A-1 |
| | (B) modified PP resin | - | B-1 | B-2 | - |
| | (C) PP resin | - | - | - | C-1 |
| | (D) PP resin (core material) | - | D-1 | D-1 | D-1 |
| Joining conditions | Joining method of (B) and (C) | - | - | - | - |
| | Lamination setting temperature | - | - | - | - |
| | Joining method of (A) + (B), (A) + (C), (A) + (B) + (C) | - | press-fusion | press-fusion | press-fusion |
| | Press setting temperature | °C | 240 | 240 | 240 |
| | Joining method of ((A) + (B), (A) + (C), (A) + (B) + (C)) and (D) | - | injection | injection | injection |
| | Injection cylinder setting temperature | °C | 220 | 220 | 220 |
| | Mold setting temperature | °C | 80 | 80 | 100 |
| | Time | s | 20 | 20 | 20 |
| | Pressure | MPa | 33 | 33 | 33 |

**[Table 4]**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Initial | | Flexural strength | MPa | 397 | 414 | 423 | 405 | 439 | 447 | 318 | 331 | 338 |
| | | Flexural modulus | GPa | 41 | 42 | 41 | 45 | 46 | 46 | 33 | 30 | 32 |
| Long term | Heat aging resistance 80°C×500h | Flexural strength | MPa | 387 | 402 | 406 | 389 | 414 | 421 | 271 | 281 | 284 |
| | | Flexural modulus | GPa | 38 | 40 | 40 | 39 | 40 | 40 | 27 | 29 | 29 |
| | Hot water resistance 40°C×500h | Flexural strength | MPa | 382 | 397 | 392 | 386 | 410 | 418 | 267 | 278 | 274 |
| | | Flexural modulus | GPa | 36 | 38 | 38 | 38 | 39 | 39 | 25 | 27 | 27 |

**[Table 5]**

| | | | | Comparative Example 1 | Comparative Example 2 | Comparative Example 3 |
|---|---|---|---|---|---|---|
| Initial | | Flexural strength | MPa | 395 | 402 | impossible to determine |
| | | Flexural modulus | GPa | 41 | 42 | |
| Long term | Heat aging resistance 80°C×500h | Flexural strength | MPa | 128 | 140 | impossible to determine |
| | | Flexural modulus | GPa | 23 | 25 | |
| | Hot water resistance 40°C×500h | Flexural strength | MPa | 121 | 126 | impossible to determine |
| | | Flexural modulus | GPa | 19 | 21 | |

### Industrial Applicability

The present invention can be applied to any composite molded article in which a fiber-reinforced resin molded article and a molded article comprising a polypropylene-based polymer are jointed and integrated via a joining layer.

## Claims

1. A composite molded article layered with the following (A), (B), (C) and (D) in this order:
(A) a fiber-reinforced resin molded article comprising a fiber-reinforced resin in which a polyamide-based resin is used as a matrix resin,
(B) a molded article comprising an acid-modified-olefin-based copolymer,
(C) a molded article comprising an unmodified-olefin-based polymer not containing an acid, and
(D) a molded article comprising a polypropylene-based polymer.

2. The composite molded article according to claim 1, wherein the polyamide-based resin in the fiber-reinforced resin molded article (A) is nylon 6, and the polypropylene-based polymer (D) is polypropylene.

3. The composite molded article according to claim 1 or 2, wherein the fiber-reinforced resin molded article (A) contains reinforcing fibers having a number average fiber length of 2 mm or more.

4. The composite molded article according to any one of claims 1 to 3, wherein the reinforcing fibers of the fiber-reinforced resin molded article (A) are continuous fibers.

5. The composite molded article according to any one of claims 1 to 4, wherein the reinforcing fibers of the fiber-reinforced resin molded article (A) are continuous fibers and oriented in one direction.

6. The composite molded article according to any one of claims 1 to 5, wherein the reinforcing fibers of the fiber-reinforced resin molded article (A) comprise carbon fibers.

7. The composite molded article according to any one of claims 1 to 6, wherein the acid-modified-olefin-based copolymer (B) comprises a copolymer obtained by copolymerization of 0.1 to 30% by weight of an unsaturated carboxylic acid or an α, β-unsaturated carboxylic acid anhydride and 70 to 99.9% by weight of a propylene-based monomer.

8. The composite molded article according to any one of claims 1 to 7, wherein the polypropylene-based polymer (D) contains a reinforcing material such as a fibrous filler and a non-fibrous filler.

9. The composite molded article according to any one of claims 1 to 8, wherein the molded article comprising an acid-modified-olefin-based copolymer (B) has a thickness in a range of 10 to 50 µm.

10. The composite molded article according to any one of claims 1 to 9, wherein the molded article comprising an unmodified olefin-based copolymer (C) is a random or block copolymer of propylene and ethylene or an α-olefin having a carbon number of 4 to 20.

11. The composite molded article according to any one of claims 1 to 10, wherein the molded article comprising an unmodified olefin-based copolymer (C) has a thickness in a range of 10 to 50 µm.

12. A method for manufacturing a composite molded article according to any one of claims 1 to 11, comprising the steps of:
placing molded articles comprising a fiber-reinforced resin (A), an acid-modified-olefin-based copolymer (B), and an unmodified-olefin-based copolymer not containing an acid (C), respectively, in a mold; and
supplying a liquefied polypropylene-based polymer (D) around the molded articles in the mold to insert-mold the molded articles.

13. The method for manufacturing a composite molded article according to claim 12, wherein the liquefied polypropylene-based polymer (D) is supplied into the mold by injection molding or injection compression molding.

14. The method for manufacturing a composite molded article according to claim 12 or 13, wherein the fiber-reinforced resin molded article (A) is molded by introducing continuous fibers into an impregnation die filled with a molten polyamide-based resin and pulling them out of a slit die.

15. The method for manufacturing a composite molded article according to any one of claims 12 to 14, wherein the fiber-reinforced resin molded article (A), the acid-modified-olefin-based copolymer (B) and the unmodified-olefin-based copolymer (C) are molded and integrated by any one of (a) a method for laminating a thin film, made by melting and integrating the acid-modified-olefin-based copolymer (B) and the unmodified-olefin-based copolymer (C), on at least one surface of the fiber-reinforced resin molded article (A) so that the acid-modified-olefin-based copolymer (B) comes into contact with the fiber-reinforced resin molded article (A), and melting it by heat pressing, and (b) a method for applying a molten acid-modified-olefin-based copolymer (B) onto at least one surface of the fiber-reinforced resin molded article (A), succeedingly applying the unmodified-olefin-based copolymer (C), and cooling them.
